(19) Europäisches Patentamt
European Patent Office
Office européen des brevets

(11) **EP 1 985 982 B1**

(12) **FASCICULE DE BREVET EUROPEEN**

(45) Date de publication et mention
de la délivrance du brevet:
**19.05.2010 Bulletin 2010/20**

(51) Int Cl.:
***G01J 5/24*** *(2006.01)*

(21) Numéro de dépôt: **08154046.0**

(22) Date de dépôt: **04.04.2008**

(54) **Capteur électronique à capacité de comptage optimisée**

Elektronischer Sensor mit optimierter Zähleigenschaft

Electronic sensor with optimised counting capacity

(84) Etats contractants désignés:
**DE FR GB IT**

(30) Priorité: **06.04.2007 FR 0754383**

(43) Date de publication de la demande:
**29.10.2008 Bulletin 2008/44**

(73) Titulaire: **Commissariat à l'énergie atomique
et aux énergies alternatives
75015 Paris (FR)**

(72) Inventeurs:
• **Dupont, Bertrand
38000 Grenoble (FR)**
• **Villard, Patrick
38700 La Tronche (FR)**
• **Chamming's, Gilles
38100 Grenoble (FR)**
• **Martin, Jean-Luc
38620 Saint Geoirs en Valdaine (FR)**

(74) Mandataire: **Ilgart, Jean-Christophe et al
Brevalex
3, rue du Docteur Lancereaux
75008 Paris (FR)**

(56) Documents cités:
**US-A1- 2002 190 208     US-B1- 6 444 983**

**Description**

**DOMAINE TECHNIQUE ET ART ANTÉRIEUR**

L'invention concerne le domaine des capteurs comprenant des compteurs numériques ou analogiques. L'invention est particulièrement adaptée pour être mise en oeuvre dans le cadre d'un circuit de lecture d'un bolomètre, par exemple dans un pixel de capteur d'images infrarouges.

Les documents US 2002/0190208 et US 6 444 983 divulguent des circuits de lecture dans les capteurs bolométriques.

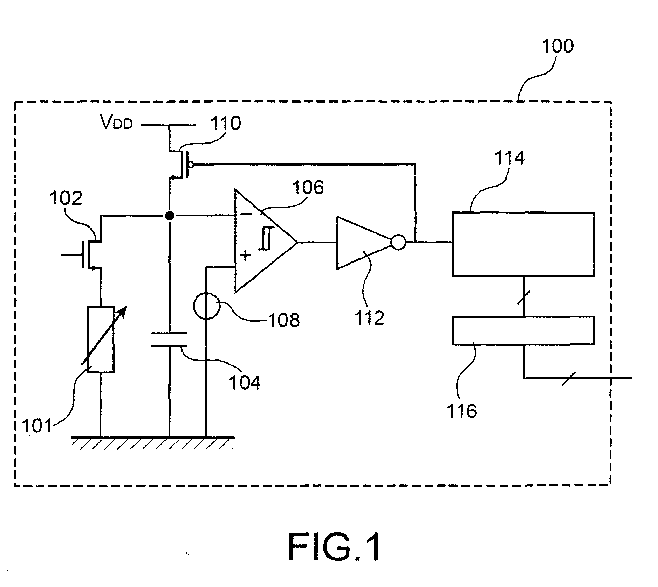

La figure 1 représente une partie d'un capteur 100 comportant un circuit de lecture d'un bolomètre 101. Ce bolomètre 101 peut par exemple être une thermistance, c'est-à-dire une résistance variant avec la température, se trouvant au niveau d'un pixel d'un capteur d'images infrarouges, le circuit de lecture faisant partie de l'ensemble de traitement de signal du bolomètre 101.

En imposant une tension fixe aux bornes de du bolomètre 101, les variations de température captées par le bolomètre 101 influent sur la valeur de sa résistance et donc sur la valeur du courant le traversant.

Le circuit de lecture convertit le courant du bolomètre 101 en un signal comportant une série d'impulsions, la fréquence des impulsions étant proportionnelle au courant du bolomètre 101. Les impulsions sont ensuite comptabilisées pendant un temps de comptage correspondant à un temps de capture ou de mesure par le bolomètre. Le nombre d'impulsions comptabilisées est délivré en sortie du circuit de lecture, ce nombre étant représentatif du courant passant dans le bolomètre 101.

Pour cela, le circuit de lecture comporte un transistor de sélection NMOS 102 dont la source est reliée au bolomètre 101, le bolomètre étant par ailleurs relié à la masse. Une tension de polarisation Vg est appliquée sur la grille du transistor NMOS 102. La tension Vg étant constante pendant la durée de capture, la tension aux bornes du bolomètre 101 est également constante. Ainsi, lorsque la température varie, la résistance du bolomètre 101 change, ce qui implique, compte tenu de la tension constante aux bornes du bolomètre 101, une variation du courant qui le traverse. Ce courant est puisé dans un condensateur d'intégration 104, faisant alors chuter la tension aux bornes de ce condensateur 104. La tension aux bornes du condensateur 104 est appliquée sur une entrée inverseuse d'un comparateur 106. Une entrée non inverseuse du comparateur 106 est reliée à un générateur de tension 108 appliquant une tension de référence $V_{ref}$, par exemple 2 V pour une tension Vg de l'ordre de 1,7 V. Un transistor PMOS 110 « de recharge » est placé entre l'entrée non inverseuse du comparateur 106 et une tension d'alimentation Vdd, par exemple égale à 3,3 V. Le transistor PMOS 110 et le condensateur 104 sont ainsi placés en série entre la masse et la tension d'alimentation Vdd. Un inverseur 112 est placé entre la sortie du comparateur 106 et la grille du transistor PMOS 110.

Préalablement à la capture, ou mesure, le condensateur 104 est « préchargé » à la tension d'alimentation Vdd, par exemple au moyen d'un transistor PMOS de précharge, non représenté, relié à la tension d'alimentation Vdd. Au démarrage de la capture, la tension aux bornes du condensateur 104 est sensiblement égale à la tension d'alimentation Vdd, puis elle diminue progressivement au cours de la capture. Quand le potentiel appliqué sur l'entrée inverseuse du comparateur 106, c'est-à-dire la tension aux bornes du condensateur 104, atteint $V_{ref}$, le comparateur 106 commute et le transistor PMOS 110 devient passant, entraînant la recharge du condensateur 104. Le comparateur 106 est par exemple un comparateur à hystérésis, afin que le condensateur 104 puisse se recharger complètement, sensiblement jusqu'à Vdd, avant qu'il ne commute en sens opposé après un certain délai. Pendant ce premier cycle, grâce à la décharge et à la recharge du condensateur 104, une impulsion à été générée en sortie du comparateur 106.

La sortie de l'inverseur 112 est reliée à un compteur 114 qui s'incrémente à chaque impulsion reçue. Ainsi, le nombre d'impulsions générées en sortie du comparateur 106 et comptées par le compteur 114 pendant une période de capture, ou période de comptage, t déterminée est représentatif de la variation de la résistance du bolomètre 101, et donc de la variation de température induite par le rayonnement infrarouge sur le bolomètre 101. Le circuit 100 comporte également des moyens de mémorisation 116 reliés à la sortie du compteur 114. Ces moyens de mémorisation 116 sont prévus pour mémoriser le nombre d'impulsions comptabilisées par le compteur 104 à la fin de la période de capture.

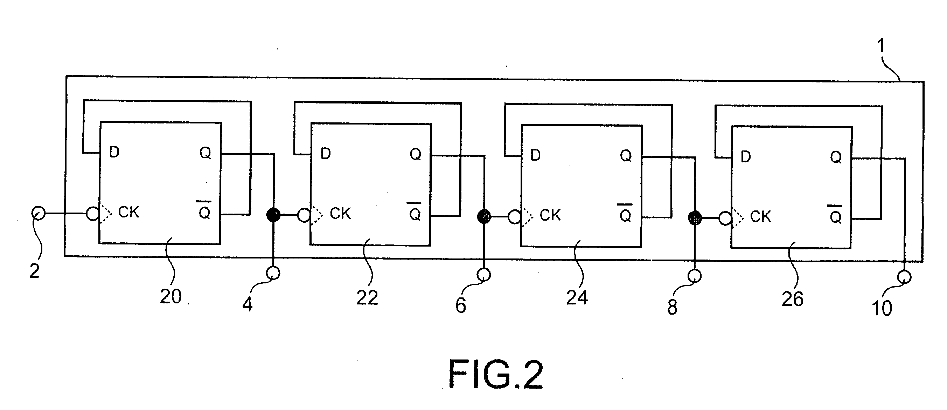

Le compteur 114 peut par exemple être un compteur logique asynchrone 1, réalisé à partir de bascules D, tel que représenté sur la figure 2. Le compteur 1 comporte une entrée 2 sur laquelle sont appliquées les impulsions générées en sortie du comparateur 102. Cette entrée 2 est reliée à une entrée d'horloge d'une première bascule D 20. La sortie de cette première bascule D 20 est reliée à une entrée d'horloge d'une seconde bascule D 22 et à une première sortie 4 du compteur 1. De la même façon, une troisième et quatrième bascules D, respectivement 24 et 26, sont reliées en série avec la première et la seconde bascules D 20 et 22, les sorties des seconde, troisième et quatrième bascules D étant reliées aux seconde, troisième et quatrième sorties, respectivement 6, 8 et 10, du compteur 1.

Lorsque l'on souhaite compter le nombre d'impulsions contenues dans un signal pendant une durée de comptage t, et que ce signal comporte par exemple un nombre maximal Y d'impulsions pendant la durée t, le compteur utilisé est un compteur n bits avec $2^{(n-1)} \leq Y < 2^n$. Sur l'exemple de la figure 2, le compteur 1 est un compteur à quatre bits, c'est-à-dire délivrant en sortie un signal numérique binaire sur quatre bits. Le compteur 1 est donc apte à compter le nombre d'impulsions d'un signal comportant au maximum 15 impulsions pendant la durée de comptage t (car $2^3 \leq 15 < 2^4$).

Il est également possible d'utiliser un compteur 114 analogique pour compter les Y impulsions du signal pendant la durée de comptage t. Le compteur analogique comporte alors un condensateur de capacité $C_1$ permettant de compter le nombre total d'impulsions du signal. Par exemple, si une impulsion implique le stockage d'un certain nombre de charges $q_1$ dans le condensateur, la capacité $C_1$ est choisie afin de pouvoir stocker toutes les charges, dont le nombre est égal à Y x $q_1$.

Toutefois, l'utilisation de tels compteurs, analogiques ou numériques, peut poser un problème d'encombrement dans certaines applications. Par exemple, dans un capteur d'images infrarouges comportant plusieurs pixels, chaque pixel comporte un bolomètre et un circuit de lecture qui inclut un compteur, par exemple un compteur numérique 16 bits, occupant une place importante au niveau de chaque pixel.

## EXPOSÉ DE L'INVENTION

Un but de la présente invention est de réduire la taille d'un capteur. Un autre but de la présente invention est d'améliorer la sensibilité d'un capteur.

La présente invention concerne un capteur électronique comportant au moins :

- des moyens de capture produisant un signal s comportant x impulsions pendant une durée de capture donnée, tel que a' < x < b', avec a', b' et x nombres entiers naturels non nuls,
- des moyens de comptage recevant le signal s, qui s'incrémentent à chaque impulsion reçue, comportant une capacité de comptage maximale égale à z telle que (b' - a') ≤ z < a', avec z nombre entier naturel non nul, réinitialisant le comptage, c'est-à-dire recommençant de compter à partir de 0, lorsque la capacité de comptage maximale z est dépassée et délivrant en sortie, à la fin de la durée de capture, le nombre d'impulsions comptées qui est représentatif du nombre d'impulsions x du signal s.

Ainsi, le capteur permet de réaliser un ébasage numérique du signal s en ne prenant en compte que l'information utile et en ne tenant pas compte de la valeur d'offset du nombre d'impulsions x du signal s, c'est-à-dire les impulsions délivrées avant la a'-ième impulsion.

Les moyens de capture peuvent comporter au moins un bolomètre à partir duquel peut être obtenu le signal s.

Dans une première variante, les moyens de comptage peuvent comporter au moins un compteur analogique. Dans ce cas, le compteur analogique peut comporter au moins un condensateur, la capacité de comptage maximale z des moyens de comptage pouvant être proportionnelle à la valeur de la capacité du condensateur, le nombre délivré en sortie des moyens de comptage pouvant être une tension aux bornes du condensateur.

Le compteur analogique peut comporter en outre :

- un comparateur pouvant comprendre une première entrée reliée à des moyens d'application d'une tension de référence, une seconde entrée reliée au condensateur et une sortie reliée à une première entrée d'une porte logique OU, une seconde entrée de la porte logique OU pouvant être destinée à recevoir un signal de réinitialisation de comptage,
- un transistor de réinitialisation du condensateur dont la grille peut être reliée à la sortie de la porte logique OU,
- un transistor de comptage dont le drain peut être relié à la seconde entrée du comparateur et la grille peut être reliée à l'entrée des moyens de comptage.

Le compteur analogique peut comporter en outre un inverseur disposé entre la sortie du comparateur et la première entrée de la porte logique OU.

Dans une seconde variante, les moyens de comptage peuvent comporter au moins un compteur numérique.

Le compteur numérique peut comporter k bits tel que $2^k = z$, k pouvant être choisi tel que m ≤ k < n, avec:

$$m = n - c,$$

n pouvant être déterminé par la relation $2^{n-1} \leq (b + d) < 2^n$,
c pouvant être déterminé par la relation

$$2^c \leq \frac{2^n}{(b-a)+2d} < 2^{c+1} ,$$

avec a, b, c, d, k, m et n nombres entiers naturels non nuls, d correspondant aux variations du nombre d'impulsions de $\pm$ d dues à des dispersions technologiques de certains composants du capteur, a = a' + d et b = b' - d.

Les moyens de capture peuvent comporter au moins :

- des moyens de comparaison pouvant comprendre une première entrée reliée à un condensateur, une seconde entrée reliée à des moyens d'application d'une tension de référence et une sortie sur laquelle est délivré le signal s,
- un transistor de recharge dont la grille peut être reliée à la sortie du comparateur et le drain peut être relié à la première entrée du comparateur,
- un transistor de sélection dont le drain peut être relié à la première entrée du comparateur, la source étant reliée à une charge variable, une tension de polarisation pouvant être appliquée sur la grille du transistor de sélection.

Le comparateur des moyens de capture peut inclure un comparateur à hystérésis.
La charge variable peut être une thermistance, tel le bolomètre lorsque les moyens de capture comporte un bolomètre.
Les moyens de comparaison des moyens de capture peuvent comporter un comparateur suivi d'un inverseur, le comparateur recevant la tension de référence sur son entrée positive, la grille du transistor de recharge et l'entrée du compteur pouvant être reliées à la sortie de l'inverseur.
Le capteur peut comporter un circuit de lecture d'un bolomètre.
La présente invention concerne également un capteur d'images infrarouges, pouvant comporter une pluralité de pixels, chaque pixel pouvant comporter au moins un capteur tel que décrit précédemment. Etant donné que dans un tel capteur les contraintes de surface sont très importantes, l'invention permet d'économiser une surface significative en utilisant un compteur plus petit que dans les circuits de lecture de bolomètre de l'art antérieur.
La présente invention concerne également un procédé de comptage du nombre d'impulsions x d'un signal s produit par un capteur électronique pendant une durée de capture donnée, tel que a' < x < b', avec a', b' et x nombres entiers naturels non nuls, comportant au moins les étapes suivantes :

- appliquer le signal s sur une entrée de moyens de comptage comportant une capacité de comptage maximale égale à z telle que (b' - a') $\leq$ z < a', avec z nombre entier naturel non nul,
- incrémenter les moyens de comptage à chaque impulsion reçue sur l'entrée et réinitialiser le comptage lorsque la capacité de comptage maximale z est dépassée,
- délivrer sur une sortie des moyens de comptage le nombre qui est représentatif du nombre d'impulsions x du signal s.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente un bolomètre et circuit de lecture de ce bolomètre qui comporte un compteur,
- la figure 2 représente un compteur logique asynchrone selon l'art antérieur,
- les figures 3A et 3B représentent des comportements de compteurs numériques à n bits et à n-2 bits durant une même durée de comptage,
- la figure 4 représente un compteur analogique du circuit de lecture de bolomètre de la figure 1, objet de la présente invention,
- la figure 5 représente les comportements de compteurs analogiques à condensateur de capacité $C_1$ et de compteurs analogiques à condensateur de capacité $C_2$, avec $C_2 < C_1$.

Des parties identiques, similaires ou équivalentes des différentes figures décrites ci-après portent les mêmes références numériques de façon à faciliter le passage d'une figure à l'autre.
Les différentes parties représentées sur les figures ne le sont pas nécessairement selon une échelle uniforme, pour rendre les figures plus lisibles.
Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

La description de l'invention est réalisée ci-dessous en liaison avec la figure 1 décrivant un capteur 100 comportant un circuit de lecture d'un bolomètre 101.

Tel que décrit précédemment, la valeur du courant circulant dans le bolomètre 101 est liée à la valeur de la température captée par le bolomètre 101. Les variations de la valeur du courant liées aux fluctuations de la température sont très faibles, par exemple égales à environ 1 % de la valeur du courant traversant le bolomètre 101, par exemple dans le cas d'une capture d'une image par rayonnement infrarouge. Le courant traversant le bolomètre 101 comporte donc un courant de polarisation, ou courant d'offset, important, n'apportant aucune information sur la température mesurée, et la valeur du courant traversant le bolomètre 101 varie peu autour de ce courant d'offset, la variation étant représentative de la variation de température mesurée par le bolomètre 101 par rapport à une température de référence.

Le compteur 114 peut être un compteur numérique, par exemple réalisé à partir de bascules D comme le compteur logique asynchrone 1 représenté sur la figure 2, ou un compteur analogique. Nous considérons dans un premier temps un capteur comportant un compteur 114 numérique.

Un circuit de lecture de bolomètre de l'art antérieur comporte un compteur à n bits, avec n tel que, pour un signal obtenu en sortie du comparateur comportant par exemple un nombre maximal Y d'impulsions pendant la durée de comptage t, on est la relation $2^{(n-1)} \le Y < 2^n$.

Selon un premier mode de mise en oeuvre de l'invention, le compteur 114 comporte un nombre de bits k qui est inférieur au nombre de bits n tel que défini ci-dessus. Pendant la durée de capture, on laisse volontairement « déborder » le compteur 114, c'est-à-dire que lorsque le compteur atteint sa valeur maximale de comptage, celui-ci recommence à compter à partir de 0 alors que le comptage total des impulsions n'est pas terminé. Le compteur réalise ainsi plusieurs cycles de comptage, le premier cycle de comptage commençant après l'initialisation du condensateur 104 par le transistor de précharge 110, et le ou les cycles de comptage suivants démarrant après chaque réinitialisation du compteur 114 suite à un « débordement » du compteur. Comme cela apparaîtra ci-après, la réalisation de plusieurs cycles de comptage n'entraîne pas de perte d'informations lorsque certaines conditions sont vérifiées. Le nombre de bits k est notamment supérieur ou égal à un nombre de bits minimum m tel que défini ci-après.

Le nombre de débordements, ou nombre de réinitialisations de comptage, $n_d$ est tel que $2^{(n-k)-1} \le n_d \le 2^{(n-k)}-1$. Ainsi, si n-k est égal à 2 il y a 2 ou 3 débordements du compteur, ou autrement dit 3 ou 4 cycles de comptage. Ces débordements volontaires permettent d'ébaser, c'est-à-dire supprimer l'offset, ou le nombre d'impulsions, ne représentant pas la variation de température mesurée par le bolomètre 101.

Le nombre de bits minimal m que peut comporter le compteur 114 est obtenu en connaissant la dynamique du signal que l'on souhaite quantifier, c'est-à-dire en connaissant les nombres minimal et maximal d'impulsions à compter pendant une durée de capture.

Plus précisément, pour une température de référence $T_{ref}$, le nombre d'impulsions produites par le capteur pendant la capture est égal à un nombre $n_{ref}$ qui est fonction du courant de polarisation traversant le bolomètre 101 et de la tension de référence $V_{ref}$ appliquée en entrée du comparateur 106. Lorsque la température mesurée par le bolomètre 101 varie par rapport à $T_{ref}$, dans une plage de températures comprises entre $T_1$ et $T_2$ incluant $T_{ref}$, le nombre d'impulsions produites par le comparateur 106 varie dans une plage définie par des bornes a et b, avec a et b nombres entiers naturels non nuls et a < b, incluant $n_{ref}$. De plus, indépendamment des variations liées à la température, le nombre d'impulsions produites par le comparateur 106 peut varier du fait de dispersions technologiques des composants du capteur 100, et notamment du bolomètre 101 et du condensateur 104 par rapport à des valeurs standards de conception de tels composants, dans un environnement standard. Ainsi, le nombre d'impulsions produites par le comparateur 106 peut fluctuer de plus ou moins d impulsions, d étant un entier positif, à cause de ces dispersions technologiques. De façon globale, le nombre d'impulsions produites par le comparateur 106 est compris entre a' et b' tel que a' = a - d et b' = b + d, avec a' et b' entiers positifs.

De manière générale, il est possible de déterminer le nombre de bits minimum m d'un compteur numérique pour réaliser le comptage du nombre d'impulsions d'un signal s comportant x impulsions pendant une durée de comptage t, tel que a-d < x < b+d, avec :

$$m = n - c,$$

n étant déterminé par la relation :

$$2^{n-1} \le (b + d) < 2^n \qquad (1),$$

c étant déterminé par la relation :

$$2^c \leq \frac{2^n}{(b-a)+2d} < 2^{c+1} \qquad (2),$$

avec a, b, c, d, m, n et x nombres entiers naturels non nuls.

Le nombre n définit le nombre de bits minimal nécessaire pour un compteur selon l'art antérieur comprenant un unique cycle de comptage, sans débordements du compteur lors de la période de capture.

Le nombre c définit le nombre maximal de bits que l'on peut « économiser » dans un capteur selon la présente invention.

Dans cet exemple de réalisation, une augmentation de la température de 50 K par rapport à une température de référence représente une augmentation de 1,2 % du courant total circulant dans le bolomètre 101 qui est converti ensuite par le comparateur 106 en impulsions. A ce courant utile qui porte l'information de la variation température, s'ajoute les variations du courant liées aux dispersions technologiques du bolomètre 101 et des éléments du circuit de lecture (notamment celles du condensateur 104) ce qui correspond ici à environ ± 10 % du courant de polarisation.

On peut donc obtenir des valeurs de courant allant de 90 % jusqu'à 111,2 % du courant de polarisation de référence obtenu pour la température de référence Tref sans dispersions technologiques, cette gamme de variation s'appliquant directement sur le nombre d'impulsions obtenues en sortie du comparateur 106. Dans cet exemple, la plage [a ; b] de valeurs de courant correspond à la plage [100% ; 101,2%] du courant de polarisation de référence. Le nombre d'impulsions d correspond à une variation de 10% du courant de polarisation de référence. La plage de variation totale du nombre d'impulsions [(a-d) ; (b+d)] correspond à la plage [90% ; 111,2%] du courant de polarisation de référence.

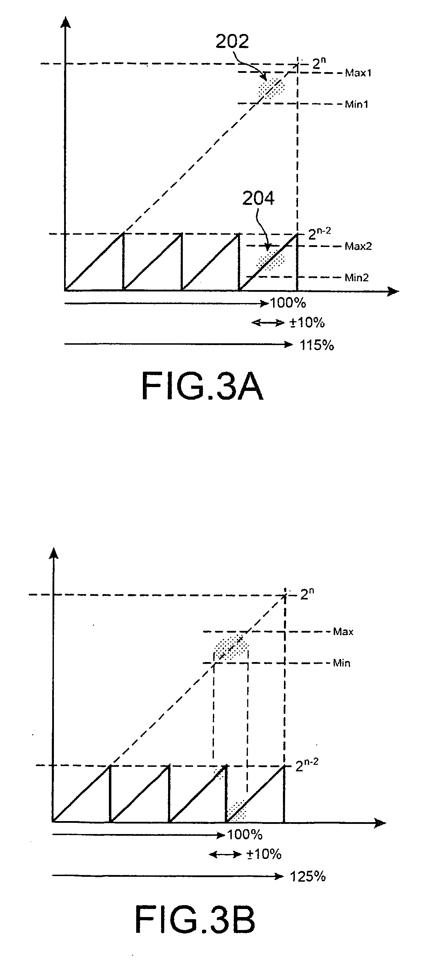

La figure 3A représente les comportements d'un premier ensemble de capteurs incluant des compteurs comportant n bits et d'un second ensemble de capteurs incluant des compteurs comportant m bits, avec m = n - 2, lors d'un comptage d'impulsions, l'axe des ordonnées représentant le nombre indiqué par le compteur à la fin de la durée de comptage, l'axe des abscisses représentant le nombre d'impulsions fournies par le comparateur pendant la durée de comptage. Les points 202 représentent les différentes valeurs indiquées par les compteurs à n bits au bout d'un temps de capture déterminé. Les points 204 représentent les différentes valeurs des compteurs à n-2 bits pour un temps de capture identique. On suppose pour chaque ensemble de capteurs que les dispersions technologiques et les variations de température relevées par les différents capteurs de cet ensemble sont identiques. On considère donc que les nombres d'impulsions délivrées en sortie des comparateurs d'un ensemble sont statistiquement identiques à ceux de l'autre ensemble. On voit sur la figure 3A que les compteurs à n-2 bits ont vu trois dépassements de leur capacité de comptage maximale durant la période de comptage, les mesures se trouvant au niveau du quatrième cycle des compteurs. Pour ces deux ensembles de compteurs, les points sont dispersés autour d'une valeur que l'on maîtrise : en effet, le choix de la tension de grille Vg du transistor NMOS de sélection 102, permet de déterminer le courant moyen passant dans le bolomètre 101 et donc la valeur moyenne du compteur à la fin du temps de capture. Enfin, les points 202 et 204 ont des ordonnées comprises respectivement entre deux valeurs frontières Min1/Max1 et Min2/Max2 représentant les nombres minimal et maximal d'impulsions fournies par le comparateur, c'est-à-dire les variations possibles du courant circulant dans le bolomètre 101. On notera que l'excursion des valeurs de chaque ensemble de points 202 et 204, c'est-à-dire (Max1 - Min1) des points 202 et (Max2 - Min2) des points 204, est identique. Par conséquent, la sensibilité, ou la résolution, des capteurs à n bits est identique à celle des capteurs à n-2 bits selon la présente invention.

Dans l'exemple décrit ci-dessus où les dispersions technologiques représentent ± 10 % du signal de référence (signal obtenu en mesurant $T_{ref}$, sans dispersions technologiques), auxquelles s'ajoute une variation allant de 0 à 1,2 % en fonction de la température mesurée, on peut définir, pour un compteur n bits couvrant jusqu'à 115 % du signal de référence, le nombre de bits c maximal que l'on peut économiser par une équation analogue à l'équation (2) susmentionnée.

Le rapport : $\dfrac{100}{((1,2-0)+2\times10)} = 5,42$ est compris entre $2^c$ et $2^{(c+1)}$. Or, on a la relation $2^2 <$ 5,42 < $2^3$. On en déduit donc, à partir du procédé détaillé précédemment, qu'il est possible « d'économiser » 2 bits, c'est-à-dire d'utiliser un compteur m bits, avec m = n - 2, comme c'est le cas sur la figure 3A. Par exemple, dans le cas d'un capteur d'images infrarouges comportant dans chaque pixel un bolomètre et un circuit de lecture à compteur numérique, il est possible d'utiliser non pas un compteur à 16 bits comme dans les capteurs d'images infrarouges selon l'art antérieur, mais un compteur à 14 bits sans perdre d'informations sur les températures mesurées.

La figure 3A représente le cas où, avec un compteur pouvant quantifier la totalité des impulsions, c'est-à-dire comportant n bits, la valeur Max1 du nombre d'impulsions comptées est proche de la valeur $2^n$. On voit que dans ce cas, pour le compteur à m = n - 2 bits, toutes les valeurs de comptage se trouvent sur un même cycle de comptage.

Le gain en nombre de bits réalisé n'implique pas que les valeurs dispersées en fin du temps de capture soient sur le même cycle de comptage d'un compteur n - 2 bits. Il est envisageable qu'une partie des valeurs de comptage soit sur un cycle, tandis que l'autre partie se trouve sur le cycle suivant, comme cela est montré sur la figure 3B qui représente les comportements de compteurs n bits et de compteurs m bits avec m = n - 2. Si les conditions énoncées ci-dessus, en relation avec les équations (1) et (2), sont vérifiées, les valeurs de comptage (en ordonnées) obtenues sur un cycle sont différentes de celles obtenues sur un cycle suivant. Il est ainsi possible de différencier ces valeurs de comptage.

Dans l'exemple donné précédemment, m est choisi avec la valeur m = n - 2. Toutefois, cette valeur représente le nombre de bits minimum du compteur. Il est possible que le compteur comporte un nombre de bits supérieur, par exemple m = n - 1.

Selon un second mode de mise en oeuvre de l'invention, le compteur du capteur comporte un nombre de bits qui est identique au nombre de bits n tel que défini ci-dessus pour un capteur classique, par l'équation $2^{(n-1)} \leq Y < 2^n$. Cependant, au lieu d'avoir un unique cycle de comptage, on effectue plusieurs cycles de comptage. Pour ce faire, on modifie le fonctionnement du capteur de façon à augmenter le nombre d'impulsions produites pendant la durée de capture. Dans l'exemple du circuit de lecture représenté en figure 1, on peut augmenter la tension de polarisation Vg du transistor 102, diminuer la capacité du condensateur 104 et/ou augmenter la tension Vref, ce qui permet d'augmenter le nombre moyen d'impulsions en sortie du comparateur 106. Grâce à cette augmentation du nombre d'impulsions en sortie du comparateur 106, on augmente la sensibilité du capteur. Il est ainsi possible de différencier des plus petites variations de température du bolomètre 101.

Afin qu'il n'y ait pas de recouvrement possibles entre des valeurs de compteur obtenues pour des cycles de comptage différents, le capteur 100 vérifie la condition suivante: (b' - a') ≤ z < a', avec a' et b' tels que définis précédemment, et z capacité maximale de comptage du compteur.

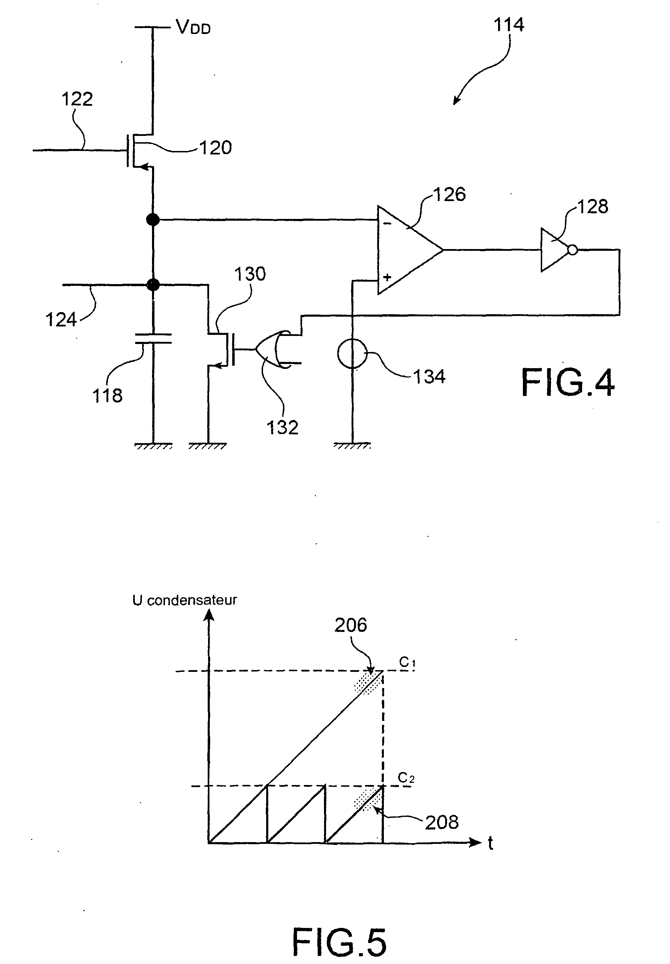

Quel que soit le mode de mise en oeuvre retenu, il est possible que le compteur 114 soit un compteur analogique. Un exemple d'un tel compteur est représenté sur la figure 4.

Le compteur 114 comporte un condensateur de comptage 118 placé entre la masse et le drain d'un transistor PMOS 120. Une source de courant, non représentée, est de préférence placée entre la source du transistor 120 et la tension d'alimentation. La grille de ce transistor PMOS 120 est reliée à une entrée 122 du compteur 114. Le drain du PMOS 120 est également relié à une entrée, par exemple l'entrée inverseuse, d'un comparateur 126. Une seconde entrée du comparateur 126 est reliée à un générateur de tension 134 fournissant une tension de référence. La sortie du comparateur 126 est reliée à l'entrée d'un inverseur 128. La sortie de cet inverseur 128 est reliée à une entrée d'une porte logique OU 132. Une autre entrée de la porte logique OU 132 permet, en appliquant un signal d'initialisation sur cette entrée, de décharger le condensateur 118 et donc de réinitialiser le comptage. La sortie de la porte logique OU 132 est reliée à la grille d'un transistor NMOS 130, le drain de ce transistor NMOS 130 étant relié au condensateur 118. Le transistor 130 et le condensateur 118 sont ainsi placés en parallèle entre la masse et un noeud 124 constituant la sortie du compteur.

Ainsi, à chaque impulsion reçue sur la grille du PMOS 120, celui-ci devient passant, stockant une certaine quantité de charges, par exemple appelée « paquet » et comportant environ 2000 électrons, dans le condensateur 118. La tension aux bornes du condensateur 118 étant proportionnelle à la quantité de charges stockées dans le condensateur 118, le nombre de paquets de charges représente le nombre d'impulsions comptées. En connaissant la quantité de charges, ou la tension aux bornes du condensateur 118, correspondant à une impulsion, il est possible d'en déduire le nombre d'impulsions reçues en mesurant la tension aux bornes du condensateur 118.

Le comparateur 126 compare la tension aux bornes du condensateur 118 avec la tension de référence, par exemple égale à environ 2 V, appliquée par le générateur de tension 134. Lorsque la tension aux bornes du condensateur 118 atteint la tension de référence, le comparateur fait commuter le NMOS 130, déchargeant le condensateur 118. Ainsi, comme pour le compteur numérique décrit plus haut, en choisissant une capacité de stockage $C_2$ du condensateur plus faible que la capacité de stockage $C_1$ nécessaire pour compter toutes les impulsions sans réinitialisation du comptage, le comptage est réalisé sur plusieurs cycles de charge du condensateur. Comme représenté sur la figure 5, les points 206 représentent des valeurs de tensions aux bornes de condensateurs de capacité $C_1$ appartenant à un premier ensemble de capteurs. Les points 208 représentent les valeurs de tensions aux bornes de condensateurs de capacité $C_2$ appartenant à un second ensemble de capteurs pour un temps de comptage identique. On voit que les condensateurs de capacité $C_2$ ont été déchargés deux fois, les valeurs de comptage se trouvant au niveau du troisième cycle des compteurs correspondant.

Il est donc possible d'utiliser une capacité plus petite tout en assurant une sensibilité identique du capteur. Avec un signal s comportant x impulsions sur une période de comptage t avec a'< x < b', et une capacité maximale de comptage égale à z, où z représente le nombre maximal de valeurs de tension pouvant être différenciées aux bornes du condensateur 118, on peut définir $C_2$, capacité minimale du condensateur pour compter les impulsions sans perte d'informations. On notera que z = $C_2 \times Vdd/\Delta Q$, où $\Delta Q$ correspond à un paquet de charges élémentaire. Par ailleurs, afin d'assurer une différenciation correcte des niveaux de sortie du compteur, $z \geq (b'-a')$. Par conséquent, la capacité est égale au minimum à $(b'-a') \times \Delta Q/Vdd$. Par ailleurs, afin d'assurer au moins deux cycles de comptage, ou autrement dit au moins un débordement du compteur, on a $z < a'$, ce qui implique que $C_2 < \Delta Q/Vddxa'$.

Par ailleurs, si on considère une valeur $C_1$ de capacité du condensateur permettant de compter toutes les impulsions sans déchargement du condensateur, le gain minimum sur la valeur de capacité est défini selon la formule suivante :

$$\frac{b'}{(b'-a')} = \frac{C_1}{C_2} \qquad\qquad (3)$$

D'autres mode de réalisation de la présente invention peuvent être envisagés. On pourra par exemple envisager un capteur à bolomètre similaire à celui représenté en figure 1, mais réalisé en logique complémentaire, le transistor de sélection étant alors un transistor PMOS, le bolomètre étant relié à la tension d'alimentation, le transistor de recharge étant un transistor NMOS, le condensateur étant relié à la masse, et ainsi de suite. De même le compteur représenté en figure 4 pourrait être réalisé en logique complémentaire.

**Revendications**

1.  Capteur électronique (100) comportant au moins :

    - des moyens de capture produisant un signal s comportant x impulsions pendant une durée de capture donnée, tel que $a' < x < b'$, avec a', b' et x nombres entiers naturels non nuls,
    - des moyens de comptage (114) recevant le signal s, qui s'incrémentent à chaque impulsion reçue, comportant une capacité de comptage maximale égale à z telle que $(b' - a') \leq z < a'$, avec z nombre entier naturel non nul, réinitialisant le comptage lorsque la capacité de comptage maximale z est dépassée et délivrant en sortie (124), à la fin de la durée de capture, un nombre représentatif du nombre d'impulsions x du signal s.

2.  Capteur (100) selon la revendication 1, les moyens de capture comportant au moins un bolomètre (101) à partir duquel est obtenu le signal s.

3.  Capteur (100) selon l'une des revendications précédentes, les moyens de comptage (114) comportant au moins un compteur analogique.

4.  Capteur (100) selon la revendication 3, le compteur analogique comportant au moins un condensateur (118), la capacité de comptage maximale z des moyens de comptage (114) étant proportionnelle à la valeur de la capacité du condensateur (118), le nombre délivré en sortie (124) des moyens de comptage (114) étant une tension aux bornes du condensateur (118).

5.  Capteur (100) selon la revendication 4, le compteur analogique comportant en outre :

    - un comparateur (126) comprenant une première entrée reliée à des moyens d'application (134) d'une tension de référence, une seconde entrée reliée au condensateur (118) et une sortie reliée à une première entrée d'une porte logique OU (132), une seconde entrée de la porte logique OU (132) étant destinée à recevoir un signal de réinitialisation de comptage,
    - un transistor (130) de réinitialisation du condensateur (118) dont la grille est reliée à la sortie de la porte logique OU (132),
    - un transistor de comptage (120) dont le drain est relié à la seconde entrée du comparateur (126) et la grille est reliée à l'entrée (122) des moyens de comptage (114).

6.  Capteur (100) selon la revendication 5, le compteur analogique comportant en outre un inverseur (128) disposé entre la sortie du comparateur (126) et la première entrée de la porte logique OU (132).

7.  Capteur (100) selon l'une des revendications 1 ou 2, les moyens de comptage (114) comportant au moins un compteur numérique.

**8.** Capteur (100) selon la revendication 7, le compteur numérique comportant k bits tel que $2^k = z$, k étant choisi tel que $m \leq k < n$, avec :

m = n - c,
n étant déterminé par la relation $2^{n-1} \leq (b + d) < 2^n$,

c étant déterminé par la relation $2^c \leq \dfrac{2^n}{(b-a) + 2d} < 2^{c+1}$,

avec a, b, c, d, k, m et n nombres entiers naturels non nuls, d correspondant aux variations du nombre d'impulsions de $\pm$ d dues à des dispersions technologiques de composants du capteur, a = a' + d et b = b' - d.

**9.** Capteur (100) selon l'une des revendications précédentes, les moyens de capture comportant au moins :

- des moyens de comparaison (106 ; 102) comprenant une première entrée reliée à un condensateur (104), une seconde entrée reliée à des moyens d'application (108) d'une tension de référence et une sortie sur laquelle est délivré le signal s,
- un transistor de recharge (110) dont la grille est reliée à la sortie du comparateur (106) et le drain est relié à la première entrée du comparateur (106),
- un transistor de sélection (102) dont le drain est relié à la première entrée du comparateur (106), la source reliée à une charge variable (101), une tension de polarisation étant appliquée sur la grille du transistor de sélection (102).

**10.** Capteur (100) selon la revendication 9, les moyens de comparaison (106) incluant un comparateur à hystérésis (106).

**11.** Capteur (100) selon l'une des revendications 9 ou 10, la charge variable (101) étant une thermistance, tel le bolomètre (101) lorsque les moyens de capture comporte un bolomètre.

**12.** Capteur (100) selon l'une des revendications 9 à 11, les moyens de comparaison comportant un comparateur (106) suivi d'un inverseur (112), le comparateur recevant la tension de référence sur son entrée positive, la grille du transistor PMOS (110) et l'entrée du compteur (114) étant reliées à la sortie de l'inverseur (112).

**13.** Capteur (100) selon l'une des revendications précédentes, ledit capteur (100) comportant un circuit de lecture d'un bolomètre (101).

**14.** Capteur d'images infrarouges, comportant une pluralité de pixels, chaque pixel comportant au moins un capteur (100) selon la revendication 13.

**15.** Procédé de comptage du nombre d'impulsions x d'un signal s produit par un capteur électronique pendant une durée de capture donnée, tel que a' < x < b', avec a', b' et x nombres entiers naturels non nuls, comportant au moins les étapes suivantes :

- appliquer le signal s sur une entrée (122) de moyens de comptage (114) comportant une capacité de comptage maximale égale à z telle que (b' - a') $\leq$ z < a', avec z nombre entier naturel non nul,
- incrémenter les moyens de comptage (114) à chaque impulsion reçue sur l'entrée (122) et réinitialiser le comptage lorsque la capacité de comptage maximale z est dépassée,
- délivrer sur une sortie (124) des moyens de comptage (114) le nombre qui est représentatif du nombre d'impulsions x du signal s.

**Claims**

**1.** Electronic sensor (100) comprising at least:

- capture means producing a signal s comprising x pulses during a given capture time, such that a' < x < b', where a', b' and x are nan-null natural integers,
- counting means (114) receiving the signal s, which are incremented with each pulse received, comprising a maximum counting capacity equal to z such that (b' - a') $\leq$ z < a', where z is a non-null natural integer, resetting the counting, when the maximum counting capacity z is exceeded and outputting (124), at the end of the capture time, a number representative of the number of pulses x of the signal s.

2.  Sensor (100) according to claim 1, the capture means comprising at least one bolometer (101) whereby the signal s is obtained.

3.  Sensor (100) according to one of preceding claims, the counting means (114) comprising at least one analogue counter.

4.  Sensor (100) according to claim 3, the analogue counter comprising at least one capacitor (118), where the maximum counting capacity z of the counting means (114) is proportional 1 to the value of the capacity of the capacitor (118), where the number output (124) from the counting means (114) is a voltage at the terminals of the capacitor (118).

5.  Sensor (100) according to claim 4, the analogue counter also comprising:

    - a comparator (126) comprising a first input coupled to application means (134) of a reference voltage, a second input coupled to the capacitor (118) and an output coupled to a first input of an OR logical gate (132), a second input of the OR logical gate (132) being intended to receive a counting reset signal,
    - a reset transistor (130) of the capacitor (118) wherein the gate is coupled to the output of the OR logical gate (132),
    - a counting transistor (120) wherein the drain is coupled to the second input of the comparator (126) and the gate is coupled to the input (122) of the counting means (114).

6.  Sensor (100) according to claim 5, the analogue counter also comprising an inverter (128) arranged between the output of the comparator (126) and the first input of the OR logical gate (132).

7.  Sensor (100) according to one of claims 1 or 2, the counting means (114) comprising at least one digital counter.

8.  Sensor (100) according to claim 7, the digital counter comprising k bits such that $2^k = z$, k being selected such that $m \leq k < n$, where:

    m = n - C,
    where n is determined by the equation $2^{n-1} \leq (b + d) < 2^n$,

    where c is determined by the equation $2^c \leq \dfrac{2^n}{(b-a)+2d} < 2^{c+1}$,

    where a, b, c, d, k, m and n are non-null natural integers, d corresponding to the variations in the number of pulses of $\pm$ d due to technological dispersions of some components of the sensor, a = a' + d and b = b' - d.

9.  Sensor (100) according to one of preceding claims, the capture means comprising at least:

    - comparison means (106 ; 102) comprising a first input coupled to a capacitor (104), a second input coupled to application means (108) of a reference voltage and an output whereon the signal s is output,
    - a recharging transistor (110) wherein the gate is coupled to the output of the comparator (106) and the drain is coupled to the first input of the comparator (106),
    - a selection transistor (102) wherein the drain is coupled to the first input of the comparator (106), the source coupled to a variable load (101), a polarisation voltage being applied to the selection transistor (102) gate.

10. Sensor (100) according to claim 9, the comparison means (106) including a hysteresis comparator (106).

11. Sensor (100) according to one of claims 9 or 10, the variable load (101) being a thermistor, such as the bolometer (101) when the capture means comprise a bolometer.

12. Sensor (100) according to one of claims 9 to 11, the comparison means comprising a comparator (106) followed by an inverter (112), the comparator receiving the reference voltage on its positive input, the gate of the PMOS transistor (110) and the input of the counter (114) being coupled to the output of the inverter (112).

13. Sensor (100) according to one of preceding claims, said sensor (100) comprising a reading circuit of a bolometer (101).

14. Infrared image sensor, comprising a. plurality of pixels, each pixel comprising at least one sensor (100) according to claim 13.

15. Counting method of the number of pulses x of a signal s produced by an electronic sensor for a given capture time, such that a' < x < b' , where a', b' and x are non-null natural integers, comprising at least the following steps:

- applying the signal s to an input (122) of counting means (114) comprising a maximum counting capacity equal to z such that (b' - a') ≤ z < a', where z is a non-null natural integer,
- incrementing the counting means (114) with each pulse received on the input (122) and resetting the counting when the maximum counting capacity z is exceeded,
- outputting (124) from the counting means (114) the number which is representative of the number of pulses x of the signal s.

**Patentansprüche**

1. Elektronischer Sensor (100), wenigstens umfassend:

- Erfassungseinrichtungen, die während einer bestimmten Erfassungsdauer ein x Impulse umfassendes Signal s erzeugen, zum Beispiel a' < x < b', mit a', b' und x als ganzen natürlichen Nicht-Null-Zahlen,
- Zähleinrichtungen (114), die sich bei jedem empfangenen Impuls inkrementieren und eine maximale Zählkapazität gleich z haben, zum Beispiel (b' - a') ≤ z < a', mit z als ganzer natürlicher Nicht-Null-Zahl, die die Zählung reinitialisieren, wenn die maximale Zählkapazität z überschritten wird, und die am Ende der Erfassungsdauer auf dem Ausgang (124) eine für die Impulszahl x des Signals s repräsentative Zahl liefern.

2. Sensor (100) nach Anspruch 1, wobei die Erfassungseinrichtungen wenigstens ein Bolometer (101) umfassen, von dem man das Signal s erhält.

3. Sensor (100) nach einem der vorhergehenden Ansprüche, wobei die Zähleinrichtungen (114) wenigstens einen analogen Zähler umfassen.

4. Sensor (100) nach Anspruch 3, wobei der analoge Zähler wenigstens einen Kondensator (118) umfasst, wobei die maximale Zählerkapazität z der Zähleinrichtungen (114) proportional ist zu dem Wert der Kapazität des Kondensators (118), und die auf dem Ausgang (124) der Zähleinrichtungen (114) gelieferte Zahl eine Spannung an den Anschlüssen des Kondensators (118) ist.

5. Sensor (100) nach Anspruch 4, wobei der analoge Zähler außerdem umfasst:

- einen Komparator (126) mit einem ersten Eingang, verbunden mit Anwendungseinrichtungen (134) einer ersten Referenzspannung, einem mit dem Kondensator (118) verbundenen zweiten Eingang, und einem mit einem ersten Eingang verbundenen Ausgang eines ODER-Verknüpfungsglieds (132), wobei ein zweiter Eingang des ODER-Verknüpfungsglieds (132) dem Empfang eines Zählungs-Reinitialisierungssignals dient,
- einen Reinitiafisierungs-Transistor (130) des Kondensators (118), dessen Gate mit dem Ausgang des ODER-Verknüpfungsglieds (132) verbunden ist,
- einen Zähltransistor (120), dessen Drain mit dem zweiten Eingang des Komparators (126) verbunden ist und das Gate mit dem Eingang (122) der Zähleinrichtungen (114).

6. Sensor (100) nach Anspruch 5, wobei der analoge Zähler außerdem einen Invertierer (128) umfasst, geschaltet zwischen dem Ausgang des Komparateurs (126) und dem ersten Eingang des ODER-Verknüpfungsglieds (132).

7. Sensor (100) nach einem der Ansprüche 1 oder 2, wobei die Zähleinrichtungen (114) wenigstens einen digitalen Zähler umfassen.

8. Sensor (100) nach Anspruch 7, wobei der digitale Zähler k Bits umfasst, zum Beispiel $2^k = z$, wobei k so gewählt wird, dass $m \leq k < n$, mit:

m = n - c,

wobei n durch die Relation $2^{n-1} \leq (b + d) < 2^n$ bestimmt wird und c durch die Relation

$$2^c \leq \frac{2^n}{(b-a)+2d} < 2^{c+1} \; ,$$

mit a, b, c, d, k, m und n als ganzen natürlichen Nicht-Null-Zahlen, wobei d den Variationen der Impulszahl von $\pm$ d entspricht, verursacht durch technische Streuungen der Komponenten des Sensors, a = a' + d und b = b' - d.

9.  Sensor (100) nach einem der vorhergehenden Ansprüche, wobei die Erfassungseinrichtungen wenigstens umfassen:

    - Vergleichseinrichtungen (106; 102), umfassend: einen mit einem Kondensator (104) verbundenen ersten Eingang, einen mit Anwendungseinrichtungen (108) einer Referenzspannung verbundenen zweiten Eingang und einen das Signal s liefernden Ausgang,
    - einen Ladetransistor (110), dessen Gate mit dem Ausgang des Komparators (106) verbunden ist und das Drain mit dem ersten Eingang des Komparators (100) verbunden ist,
    - einen Selektionstransistor (102), dessen Drain mit dem ersten Eingang des Komparators (106) verbunden ist und die Source mit einer variablen Last (101) verbunden ist, wobei an das Gate des Transistors (102) eine Polarisationsspannung angelegt wird.

10. Sensor (100) nach Anspruch 9, wobei die Vergleichseinrichtungen (106) einen Hysterese-Komparator (106) umfassen.

11. Sensor (100) nach einem der Ansprüche 9 oder 10, wobei die variable Last (101) ein Thermistor ist, zum Beispiel das Bolometer (101), wenn die Erfassungseinrichtungen ein Bolometer umfassen.

12. Sensor (100) nach einem der Ansprüche 9 bis 11, wobei die Vergleichseinrichtungen einen Komparator (106), gefolgt von einem Invertierer (112) umfasst, wobei am positiven Eingang des Komparators die Referenzspannung anliegt und das Gate des PMOS-Transistors (110) und der Eingang des Komarators (114) mit dem Ausgang des Invertierers (112) verbunden sind.

13. Sensor (100) nach einem der vorhergehenden Ansprüche, wobei der genannte Sensor (100) eine Ausleseschaltung eines Bolometers (101) umfasst.

14. Infraroibild-Sensor mit einer Vielzahl von Pixeln, wobei jedes Pixel wenigstens einen Sensor (100) nach Anspruch 13 umfasst.

15. Verfahren zum Zählen der Impulszahl x eines durch einen Sensor während einer bestimmten Erfassungszeit erzeugten Signals s, zum Beispiel a' < x < b', mit a', b' und x als ganzen natürlichen Nicht-Null-Zahlen, zumindest die folgenden Schritte umfassend:

    - Anlegen des Signals s auf einem Eingang (122) der Zähleinrichtungen (114) mit einer maximalen Zählkapazität gleich z wie zum Beispiel (b' - a') $\leq$ z < a', mit z als ganzer natürlicher Nicht-Null-Zahl,
    - Inkrementieren der Zähleinrichtungen (114) bei jedem auf dem Eingang (122) empfangenen Impuls und Reinitialisieren der Zählung, wenn die maximale Zählkapazität z überschritten wird,
    - Liefern der für die Impulszahl x des Signals s repräsentativen Zahl auf einem Ausgang (124) der Zähleinrichtungen (114).

FIG.1

FIG.2

FIG.3A

FIG.3B

FIG.4

FIG.5

**EP 1 985 982 B1**

**RÉFÉRENCES CITÉES DANS LA DESCRIPTION**

**Documents brevets cités dans la description**

- US 20020190208 A
- US 6444983 B